# EUROPEAN PATENT APPLICATION

(11) **EP 0 547 993 A2**
(43) Date of publication of application: **23.06.1993**
(21) Application number: 92480177.2
(22) Date of filing: 19.11.1992
(51) Int. Cl.: G06F 3/033

(54) **3-D multiple view window**

(30) Priority: 18.12.1991 US 810732
(71) Applicant: INTERNATIONAL BUSINESS MACHINES CORPORATION, Armonk, N.Y. 10504 (US)
(72) Inventor: Haynes, Thomas R., Euless, TX 76039 (US)
(74) Representative: de Pena, Alain

(57) **Abstract**

A method and apparatus is provided for dividing a display screen into distinct areas in which different display images can be viewed at the same time. Direct manipulation techniques are provided to enable a user to access the different display images. A six-sided three dimensional window is disclosed which allows six views of an object. Direct manipulation user techniques in the form of drag operations are provided to toggle between any of the six views by dragging a position indicator (e.g. cursor) over the borders of the window using a pointing device (e.g. mouse). Rotation of the views is achieved by dragging the position indicator over the corners of the window.

## Description

This invention relates to a method and apparatus for dividing a display screen into distinct areas in which different display images can be viewed at the same time, and more particularly, to the creation of a three-dimensional multiple view window which permits the switching of displayed images using direct manipulation techniques.

The usefulness of computer systems is directly related to a user's ability to communicate effectively and efficiently with the computer system. Central to this ability to communicate is the need to have a comprehensive display of images available to the user of work objects being operated upon in an interactive manner.

One approach at accomplishing this goal consists of dividing the display screen into split panels (e.g. split screen) and spreading information over the split panels. For example, the display screen may be split into two equally sized display panels and arranged so that the split panels abut each other in a manner similar to portions of an opened book. A cursor image/pointer (e.g. position indicator) coupled to a pointing device (e.g. a mouse) may be used to access the information in a serial manner in each of the split panels. A variation on this approach provides a front-end menu/dialog that controls access to the given panels.

Another approach calls for overlapping segmented areas of a display area in much the same way as piling a stack of books on a desk. In this approach, the most recently used or "active" window would appear on the top (e.g. view not obscured by other windows) and the least recently used window would appear on the bottom. A user is unable, using the known approaches, to use direct manipulation techniques to change the displayed images. For example, a user wishing to replace the current view (e.g. switch from an iconic view of a list to a textual view) of an object must either replace the current view or open a new window to a new view using multiple combinations of keyboard strokes or mouse manipulations in conjunction with menu bars. A user cannot, using the direct manipulation technique known as a drag operation, switch to a new view while maintaining the current view. Drag as used herein describes the moving of a pattern, image or shape using a cursor image coupled to a pointing device.

Consequently, what is needed is an apparatus and method for dividing a display screen into distinct areas in which different displayed images can be viewed at the same time and provide direct manipulation techniques for changing the view of different images.

This invention relates to a method and apparatus for dividing a display screen into distinct areas in which different display images can be viewed at the same time. Direct manipulation techniques may then be applied to enable a user to access the different display images. A six-sided six dimensional window is disclosed which allows up to three simultaneous views of an object. Direct manipulation user controls are provided to toggle between any of the six simultaneous views by dragging a position indicator (e.g. cursor) over the borders of the window using a pointing device (e.g. mouse). Rotation of the views is also provided by dragging the position indicator over the corners of the window.

Figure 1 is a block diagram of a data processing system where this invention may be practiced.
Figure 2 is a wire frame representation of a window created by this invention.
Figure 3 demonstrates the use of a two-sided view in a two dimensional implementation.
Figure 4 demonstrates how to rotate information in a two dimensional implementation.
Figure 5 demonstrates how to rotate information using the invention in a three dimensional implementation.
Figure 6 demonstrates the use of the invention in a three dimensional implementation using direct manipulation techniques.
Figure 7 is a flow diagram demonstrating manipulation of a two-sided window in a two-dimensional implementation.
Figures 8 and 9 are flow diagrams demonstrating manipulation of a six-sided window in a three-dimensional implementation.

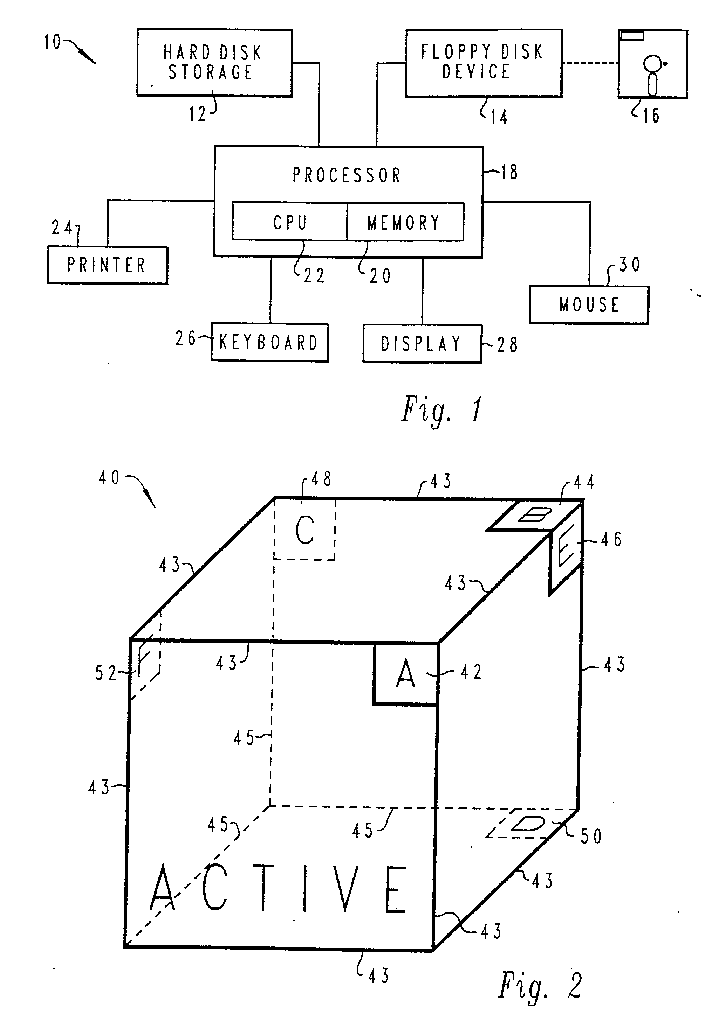

With reference now to the figures, and in partic- ularwith reference to Figure 1, there is depicted a pictorial representation of data processing system 10 which may be utilized to implement the method of the present invention. As may be seen, data processing system 10 may include a processor unit 18 having a central processing unit 22 (CPU) coupled to relatively fast memory 20. Of course, those skilled in the art will appreciate that a plurality of user Input/Output devices may be connected to the processor unit 18 including a keyboard 26 for manual entry of information, a display 28 for presenting the output of a computer program, a printer 24, and a pointing device such as a mouse 30.

As is common in such data processing systems, auxiliary storage may be provided in the form of fixed hard disk storage 12 and/orfloppydiskdevice 14. Removable media in the form of a diskette 16 may be used to input a computer program into the data processing system 10 via the floppy disk device 14. It should be understood that the method disclosed by this invention may be described in a computer program product and inputted in the manner described above.

Turning now to Figure 2, a six-sided window 40 as disclosed by this invention is shown. The window 40 is capable of six different views. The heavy black borders 43 indicate the views currently viewable by a userwhile the dotted lines 45 indicate views that are hidden. Orientation of the window40 as shown in Figure 2, results in View A42 being the "active" window. An active window is defined as a currently viewable window in which the user can update or change the information therein using one of the I/O devices (e.g. keyboard, mouse, etc). Still referring to Figure 2, Views B 44 and E 46 are shown shadowed. Unlike the active View A42, the shadowed views while currently viewable are incapable of being changed/updated by the user. Forthe purpose of this invention, shadowing refers to non-active views in a three-dimensional window which are currently viewable and shown in perspective. Views C 48, D 50, and F 52 are hidden from view when the window is oriented as shown. However, the views are easily accessible using direct manipulating techniques which will be described later.

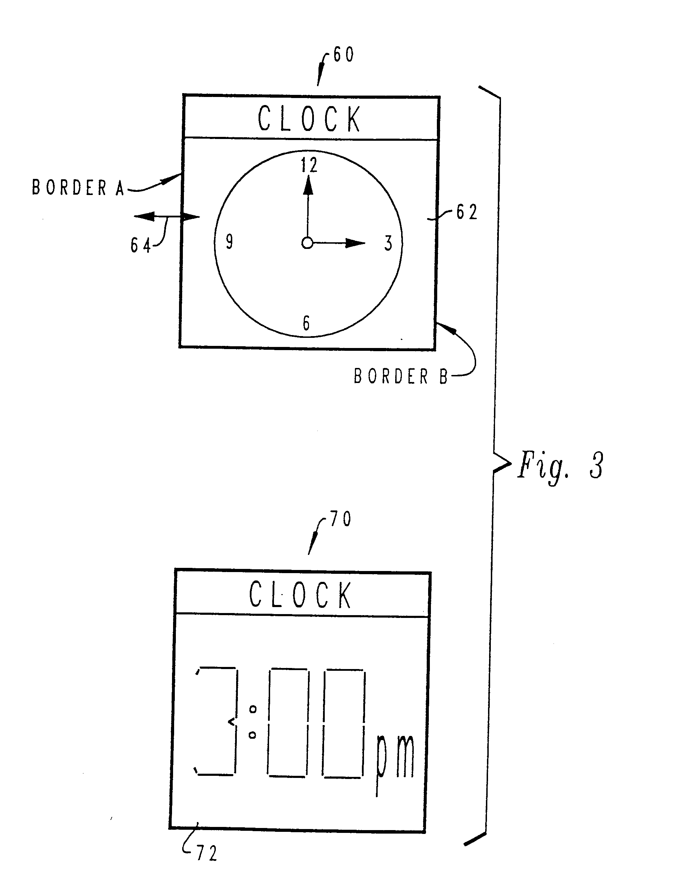

With reference to Figure 3, presentation of the two-sided window on a two-dimensional display will be described. Analog clock View 60 and digital clock View 70 reside on adjacent views of the three-dimensional window. Analog clock View 60 is composed of a clock face image 62 indicating 3 P.M. Likewise, digital clock View 70 is shown composed of a digital image synchronized with the analog clock View 60. The borders of the window for analog clock View 60 are shown as "Border A" to the left and "Border B" to the right. A cursor 64 is shown super-imposed on "Border A". In order to "flip" the analog clock View 60 to show the digital clock View 70, the cursor 64 is placed on border A and a drag operation is done across border B. This operation causes the analog clock View 60 to flip over revealing the digital clock View 70. Those skilled in the art will recognize that a system developer may decide to allow only one view of a given object or contextually only one view should be allowed at the current time. The current invention is easily modified so that if a user finds that physical constraints prohibit movement of one window border across the opposite border, a drag operation may be allowed to provide only a smaller window. However, if two views are supported, the result of the drag would be a re-sized windowwith the view from the opposite side of the window shown.

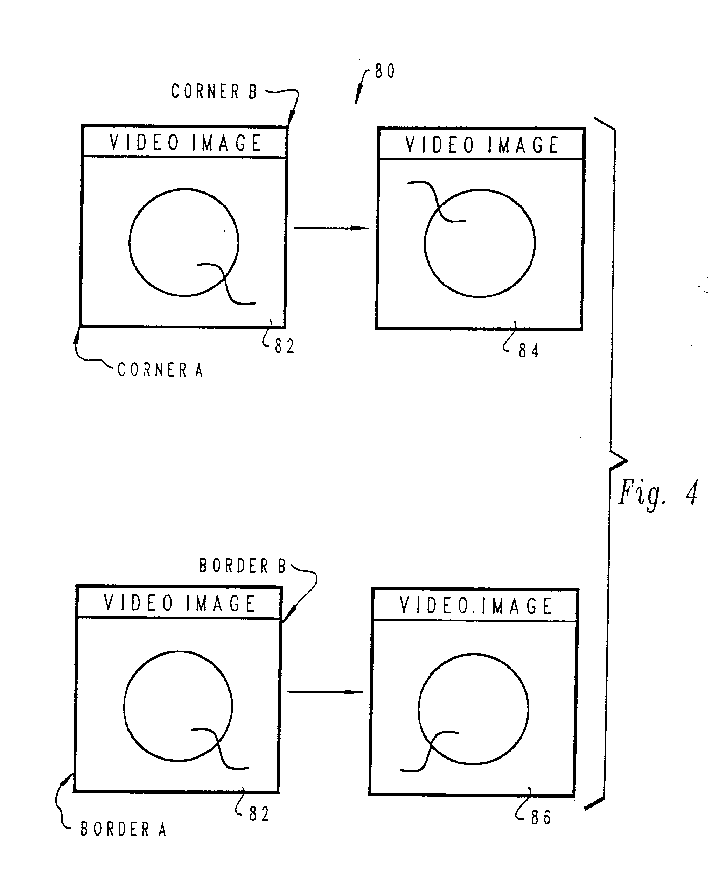

Using direct manipulation drag operations, various orientations of a video image may be described through the use of this invention. With reference to Figure 4, three orientations of the letter "Q" are shown. As shown generally at 80, the normal orientation of the letter Q 82 may be stored as one view while its "reversed and upside down" orientation 84 may be stored as a second view. The "reversed" letter Q 86 may be stored as yet a third view with the three views being accessed in the following manner. Placing the mouse cursor at "Border A" and dragging it across "Border B" would access the "reversed" View 86 of the letter Q. Likewise, placing the cursor at "Corner A" and dragging it across "Corner B" would access the "reversed and upside down" image 84. In this manner, any number of views may be added and accessed using direct manipulation drag operations.

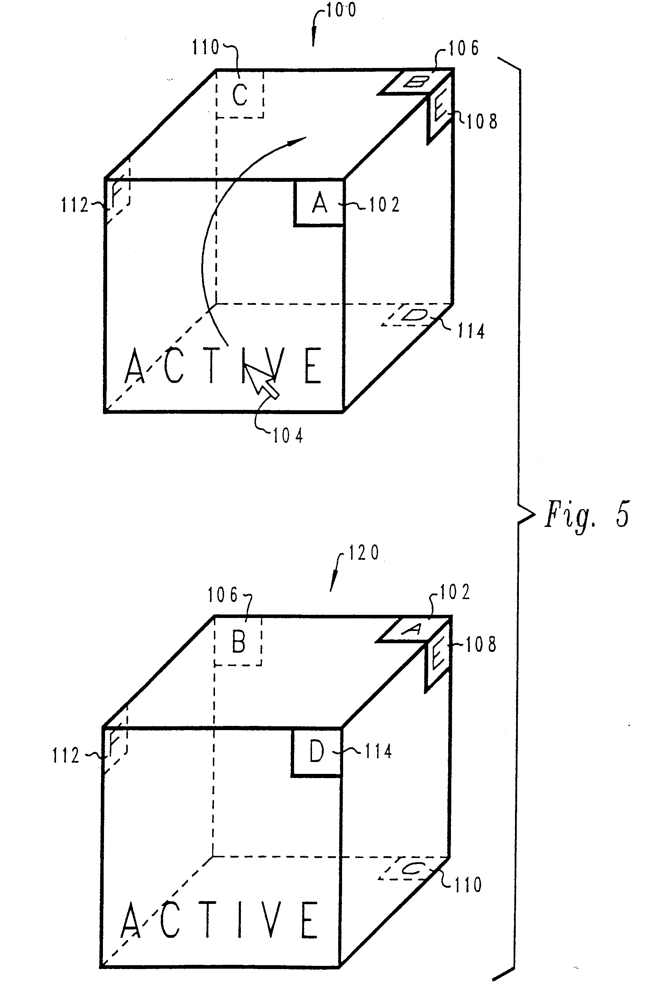

Turning now to Figure 5, the use of the three-dimensional window for simultaneous viewing of multiple images will be described. Asix-sided window 100 is generally shown in Figure 5. View A 102 is the active view and is shown with a mouse pointer 104 super-imposed in the image area. Views B 106 and E 108 are shown as shadowed views with Views C 110, D 114, and F 112 hidden. To display hidden View D 114 requires the following operations. The mouse pointer 104 is moved into active View A 102. A drag operation is then performed such that the mouse pointer 104 is moved over the border between active View A 102 into View B 106. This results in uncovering previously hidden View D 114, as shown in the flipped View 120. An examination of flipped View 120 reveals that View D 114 is now the active view. Previously shadowed View B 106 is now a hidden view along with previously active View A 102. It should be noted that Views E 108 and F 112 have not changed positions. They would have changed positions, however, if the drag operation had originated at a corner. As can be seen, this invention represents a significant improvement over the prior art in its ability to show a plurality of images simultaneously while permitting easy access to hidden views through simple direct manipulation techniques.

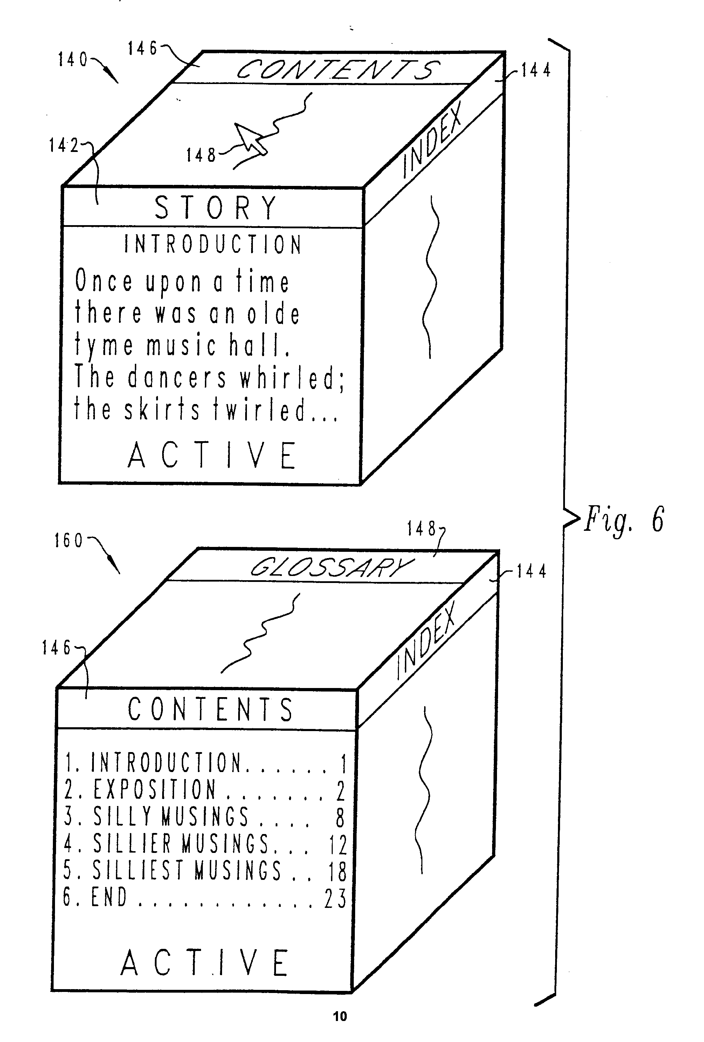

With reference now to Figure 6, additional embodiments of the invention used in a character based mode are shown. A presentation is shown generally at 140 which allows a user to view three views of the six-sided window. An index View 144, table-of-contents View 146, and a story View 142 are the currently viewable images. The story View 142 is the active view where a user may update/change the view. To access additional views, a user moves a mouse cursor 148 into the table-of-contents View 146 and performs a drag operation across the border separating the table-of-contents View 146 from the story View 142. This operation results in access to hidden views such as those shown in the flipped View 160. The flipped View 160 shows that the table-of-contents View 146 now becomes the active view with the story View 142 hidden. In addition, previously hidden glossary View 148 has now surfaced from the back of the window. As disclosed, the invention has the flexibility to conform to any number of modes including the display of graphical and text based applications.

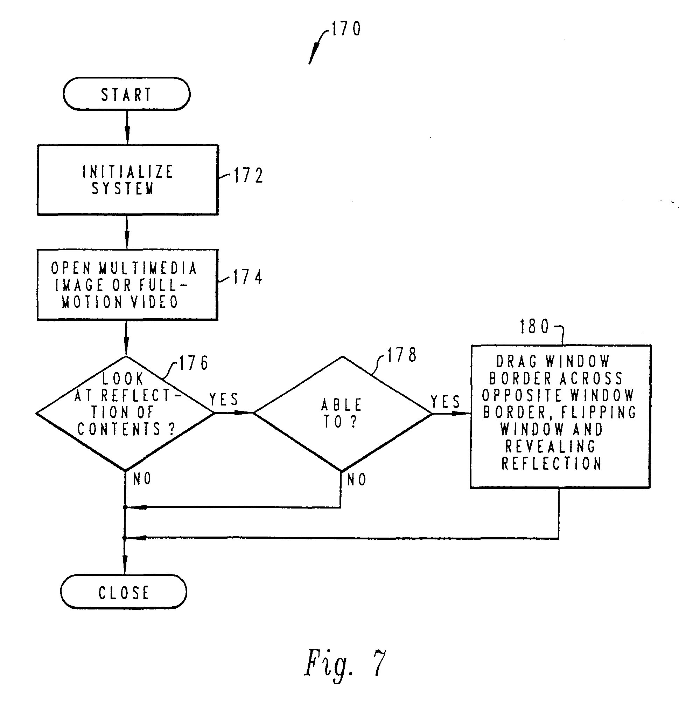

Turning now to Figure 7, manipulation of the two-sided window in two-dimensional applications will be further explained. A flow-diagram 170 is generally shown for manipulating the two-sided window in two-dimensional applications. At block 172, the data processing system is initialized. Various images may then be opened for each of the views including graphical (e.g. including multimedia images or full motion video) or text images as shown at block 174. At block 176, a user decides if a currently hidden view should be displayed (e.g. request to look at the reflections on window views). If a two-sided window is implemented as determined at block 178, user actions are permitted to change the current view. At block 180, a user may drag a mouse cursor across the opposite window of either the window border or window corner to flip the view and reveal a new image. It is to be understood that the two-sided window may be the front side and rear side of a window or any two adjacent sides of a three-dimensional IMage.

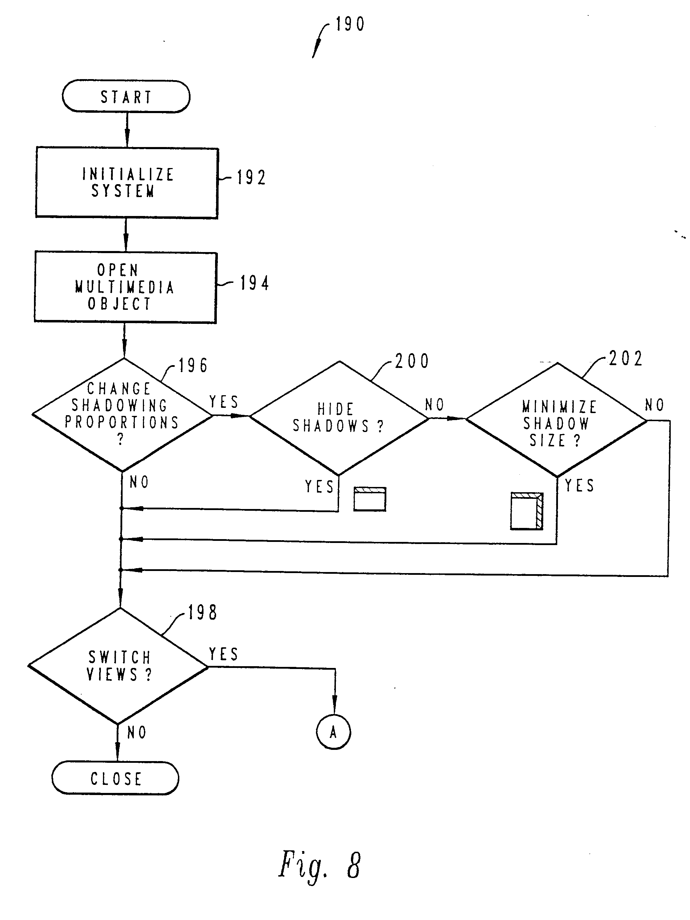

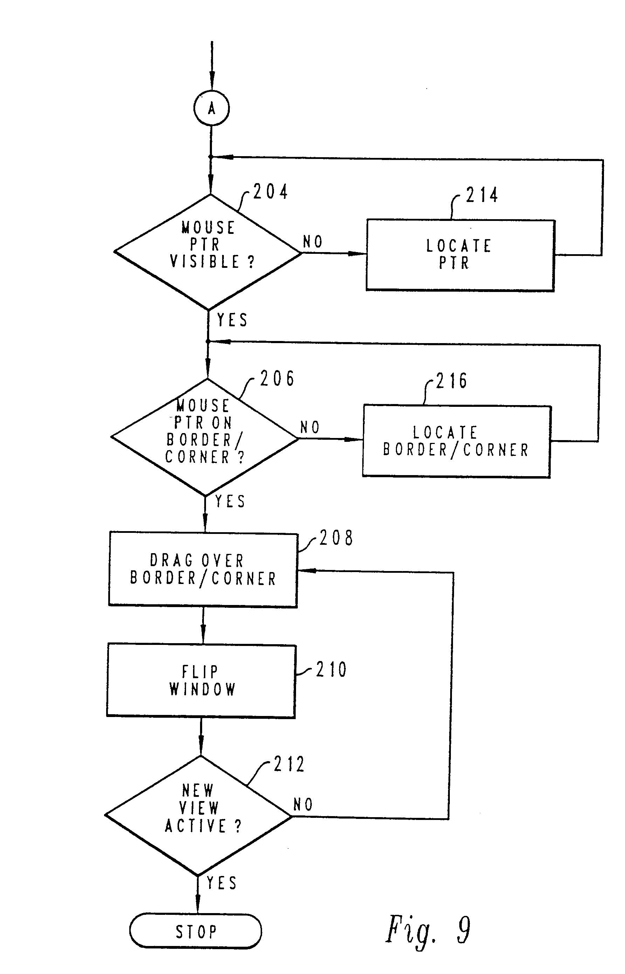

Turning now to Figure 8, similar operations are disclosed for the invention when used in a three-dimensional environment. System initialization for the data processing system occurs at block 192. The six views of the window are then assigned images by opening multimedia/text/graphical objects for each of the six views as shown at block 194. A user at block 196 is provided an option to change the shadowing proportions of the window. At block 200 the user is provided an option to completely hide all views except the active view. When selected, the currently visible view is reduced to a single two-dimensional image. The user is also provided an option to minimize the shadow size as indicated at block 202. Using this option, a user can vary the angles of the prospective images thus increasing or decreasing the size of the non-active images. Regardless of the type of shadowing proportions selected by a user, the various views may be easily accessed by a user as indicated at block 198 using direct manipulation techniques. Turning now to Figure 9, If the user elects to change the views, the mouse pointer must be located and rendered visible to the user as indicated in blocks 204 and 214. The mouse pointer must then be positioned on the window border or corner as indicated in blocks 206 and 216. A direct manipulation drag operation as shown in block 208 may then be performed which results in flipping the view as indicated at block 210 to reveal a new image as indicated in block 212. A user is permitted to repeat the drag operation until all views have been seen.

In summary, this invention extends the basicwin- dow metaphor. Traditionally, windows are assumed to be two-dimensional with a one-side-only view. The present invention permits a continuation of this one-side-only view but adds the capability of one to five additional views. A six-sided rectangular window is disclosed which allows up to six views. A user may toggle between the views using direct manipulation drag operations. In addition, a two-sided view is disclosed which operates in a traditional two-dimensional mode which allows a user to flip from one view to the next by dragging a side/corner of the window border across the opposite border. When used in the six-sided three-dimensional mode, the invention allows the simultaneous viewing of three views with the three hidden views accessible by dragging the cursor from a current view to a different view. Unlike traditional techniques which may lead to messy electronic desktops (e.g. overlapping windows) or the loss of views, the present invention allows users to see multiple views of an object using simple drag operations. Furthermore, the present invention is adaptable to a plurality of different environments. For example, the invention is easily adaptable to the multimedia area where photo-quality images may comprise the various views. A user could be given access to mirror images or the mirror image turned upside down of a photo by dragging the side or corner of the window. This type of image rotation is useful in medical diagnostics, CAD/CAM, film-editing, etc. In addition, desktop publishing would find many uses for the present invention. An editor, for example, during the preparation of a magazine edition, could use the six-sided window to edit a story, then drag to a view of the Table-of-Contents to verify title matches, then drag to an index or a glossary. As readily seen, the disclosed invention maintains current functions available in two-dimensional environments while adding flexibility and ease of use in viewing additional images using direct manipulation techniques.

## Claims

1. A system for dividing a display screen in a data processing system into distinct areas to form a plurality of views in which different images can be viewed, at least one of said plurality of views currently visible to a user, said system comprising: means for generating a six-sided window on said display screen, each side of said window representing one of said plurality of views; and means for storing one of a plurality of different images on each of said one of said plurality of views, wherein said currently visible view is changeable in response to inputs by said user.

2. A system as recited in Claim 1, further comprising:
means for storing one of a plurality of different images on each of said one of said plurality of views, wherein said currently visible view is editable in response to inputs by said user.

3. A system as recited in Claim 1, further comprising:
means for generating a position indicator on said display screen super-imposed over said currently visible view; and
means coupled to said position indicator means for moving said position indicator about said screen in response to inputs by said user to a pointing device to change said currently visible view.

4. A system as recited in Claim 3, wherein said position indicator comprises a cursor.

5. A system as recited in Claim 3, wherein said pointing device is a mouse.

6. A system as recited in Claim 3, wherein changing said currently visible view is accomplished by grasping with a pointing device a border of said window.

7. A system as recited in Claim 3, wherein changing said currently visible view is accomplished by grasping with a pointing device an edge of said window.

8. A system as recited in Claim 1, further comprising:
means coupled to said position indicator means for varying a shadowing proportion of said window in response to user movement of said pointing device.

9. A system as recited in Claim 1, wherein said six-sided window is a rectangle.

10. A method of dividing a display screen on a data processing system into distinct areas to form a plurality of views in which different images can be viewed, said method comprising:
generating a three-dimensional window on said display screen having a plurality of sides, each one of said plurality of sides representing one of said plurality of views; and
storing a plurality of different images on each of said views for manipulation by a user in response to movement of a pointing device.

11. A method as recited in Claim 10, furthercompris- ing:
generating a position indicator on said display screen super-imposed over a currently visible view, said pointing indicator coupled to a pointing device for moving said pointing indicator in response to manipulation by said user; and changing said currently visible view to another one of said plurality of views in response to said user manipulation of said pointing indicator.

12. A method as recited in Claim 10, furthercompris- ing:
varying a shadowing proportion of said window in response to user movement of said pointing device.

13. A method as recited in Claim 11, wherein said position indicator is a cursor.

14. A method as recited in Claim 10, wherein said pointing device is a mouse.

15. A method as recited in Claim 10, wherein said three-dimensional window is a rectangle.

16. A method as recited in Claim 11, wherein changing said currently visible view is accomplished by grasping with a pointing device a border of said window.

17. A method as recited in Claim 11, wherein changing said currently visible view is accomplished by grasping with a pointing device an edge of said window.
